# EUROPEAN PATENT APPLICATION

(11) **EP 3 694 142 A1**
(43) Date of publication of application: **12.08.2020**
(21) Application number: 19155962.4
(22) Date of filing: 07.02.2019
(51) Int. Cl.: H04L 9/08, H04L 29/06

(54) **MANAGEMENT AND DISTRIBUTION OF KEYS IN DISTRIBUTED ENVIRONMENTS (IE CLOUD)**

(71) Applicant: Tomes GmbH, 79108 Freiburg i. Br. (DE)
(72) Inventor: Spohn, Lucas, 79114 Freiburg i. Br. (DE); Meinke, Jerome, 79114 Freiburg i. Br. (DE)
(74) Representative: Valvoda, Jakob

(57) **Abstract**

A method for securely retrieving data on a client device in a distributed environment is disclosed. The method comprises retrieving a key encryption key from a local storage, retrieving an encrypted private key associated with the key encryption key from the distributed environment, the encrypted private key being remotely stored in the distributed environment, decrypting the encrypted private key using the key encryption key, thereby generating a private key, retrieving encrypted data from the distributed environment, the encrypted data being remotely stored in the distributed environment, and decrypting the encrypted data using the private key. A respective client device, a method for securely providing data in the distributed environment, and a distributed environment are disclosed.

## Description

### TECHNICAL FIELD

The disclosure relates to management and distribution of keys in distributed environments. In particular, the disclosure may relate to a method for securely retrieving data on a client device in a distributed environment, a respective client device, a method for securely providing data in a distributed environment, a corresponding distributed environment, and one or more machine-readable media.

### BACKGROUND

In recent processing environments, data is processed on a variety of computing devices. The data may be stored locally and transmitted over networks in order to enable processing on respective computing devices. In other processing environment, data may be stored on remote storage devices, which may be accessed by computing devices via network.

Data security requires that data is made available to authorized entities only. This in particular applies to sensitive data, such as medical data or personal data, which may be stored on remote storage devices, such as in a cloud. Sensitive data is typically encrypted for transmission and/or storage and only authorized entities are provided with or in possession of corresponding decryption keys to prevent access to the sensitive data by unauthorized entities.

Various kinds of encryption exist, such as symmetric encryption schemes, asymmetric encryption schemes, or public key infrastructures (PKIs), to name a few. In symmetric encryption schemes, the same key is used for encryption and decryption of the encrypted data. Hence, any entity - even an unauthorized entity - in possession of the key is capable of decrypting encrypted data. As a consequence, access to the key has to be controlled and the key has to be kept secret. Symmetric encryption is typically efficient: data can be encrypted and decrypted in a fast manner with a limited number of processing resources.

PKIs rely on key pairs consisting of a public key and a corresponding private key. The private key is associated with the public key in that data encrypted using the public key can only be decrypted with the corresponding private key. Hence, the private key has to be kept secret and the public key can be published in an unrestricted manner. As a consequence, data in PKIs is encrypted for one or more intended recipients only and the data cannot be decrypted by an entity that is not in possession of the corresponding private key. Public key encryption and decryption typically requires more processing resources than symmetric encryption.

Generally, security of encryption schemes highly depends on the chosen keys, their strength, such as randomness of the chosen keys, or their length, to name a few, and the security measures for securing the decryption keys, if required. Hence, each encryption scheme requires a key management that guarantees that only authorized entities are in possession of respective decryption keys.

It is one object of the present disclosure to enable a secure retrieval and provision of data in distributed environments.

It is yet another object of the present disclosure to provide for a highly usable provision of sensitive data across distributed environments, which is highly secure, yet does not require a complex exchange or memorizing of keys.

### SUMMARY

These and other objects are solved by a method for securely retrieving data on a client device and a respective client device, a method for securely providing data in a distributed environment and a respective distributed environment, as well as machine-readable media as defined in the independent claims. Preferred embodiments are defined in the dependent claims.

According to a first aspect of the present disclosure, a method for securely retrieving data on a client device in a distributed environment is defined. The method comprises retrieving a key encryption key from a local storage, retrieving an encrypted private key associated with the key encryption key from the distributed environment, the encrypted private key being remotely stored in the distributed environment, decrypting the encrypted private key using the key encryption key, thereby generating a private key, retrieving encrypted data from the distributed environment, the encrypted data being remotely stored in the distributed environment, and decrypting the encrypted data using the private key.

According to the present disclosure, an encryption scheme is provided, where data may be encrypted and stored remotely in the distributed environment. The data is encrypted and can be decrypted using the private key only. This may include a symmetric encryption using the private key for both encryption and decryption, or an asymmetric encryption using a corresponding public key. Moreover, combinations of symmetric and asymmetric encryption schemes and other encryption schemes can be used. Hence, the term "private key" as used in embodiments of the present disclosure refers to a cryptographic key to decrypt encrypted data. The key is private since it is secured and owned by a user. However, the cryptographic key is not restricted to a private key of a key pair in PKIs, even though asymmetric encryption could be used in one or more embodiments, where the cryptographic key may correspond to the private key of the key pair. The private key may also be denoted as an encryption key or EK.

To simplify provision of keys for decryption, the private key is provided via the distributed environment as well. However, in order to prevent unauthorized access to and retrieval of the private key from a remote storage within the distributed environment, the private key is stored in an encrypted manner. Since the private key needs not to be maintained locally or memorized or provided by a user, the private key may be a strong key of a particular length or complexity, wherein the strength of the keying material may be selected based on security requirements attributed to the sensitive data.

The term "strong key" as used throughout this disclosure refers to a cryptographic key, which is cryptographically strong and, accordingly, has a greater resistance to attacks, such as brute force key search, and the like. In particular, strong keys may be randomly selected, may have a particular composition, and/or may have a particular key length or key size that is defined by the underlying cryptographic scheme as sufficient for a particular purpose, such as, at last 128-bit keys for AES (Advanced Encryption Standard), 2048-bit keys for RSA, 256-bit keys for ECDH (Elliptic-curve Diffie-Hellman), and the like, or longer or shorter keys, as required. In particular scenarios, strong keys may also refer to keys of a particular length with a random selection of characters, numerals and symbols. It is to be understood that requirements for strong keys may change depending on security requirements, development of computing technology, such as quantum computing, availability of computing resources, and known attacks.

The private key (and any other keying material) may be randomly generated during initialization or registration of a user. The private key may be configured to comply with criteria for a strong key. To secure the private key in the remote storage, the private key is processed using a key encryption key, which is capable of both: encrypting the private key and decrypting an encrypted version of the private key. Any authorized entity having the key encryption key may retrieve and decrypt the encrypted private key from the distributed environment, retrieve the encrypted data from the distributed environment, and decrypt the encrypted data using the (decrypted) private key. The key encryption key may have a particular length and may fulfill security requirements attributed to the sensitive data. Hence, the key encryption key may be a strong key.

The encryption scheme and system set-up according to the present disclosure enables a highly flexible and secure environment for securely distributing and retrieving sensitive data in a distributed environment. Even if an unauthorized entity would have access to the remotely stored encrypted data, the data cannot be decrypted without the private key. Then again, even though the private key is remotely stored in the distributed environment, the private key cannot be obtained without the key encryption key. Hence, an unauthorized entity, which is not in possession of the key encryption key, cannot decrypt the encrypted private key and the encrypted data even if it may gain unauthorized access to the encrypted private key and to the encrypted data in the distributed environment. On the other hand, any authorized entity having the key encryption key may access the distributed environment, generate the private key, and decrypt the sensitive data in a seamless manner. This further avoids a complex key management.

Preferably, the method may be entirely or at least partially implemented on the client device that may access the distributed environment via a network.

In one embodiment, the encrypted private key is stored in a cloud storage of the distributed environment. By storing the encrypted private key in the cloud storage, access to the encrypted data maybe provided from different client devices or locations.

The term "cloud storage" as used throughout the present disclosure refers to a computer data storage model in which digital data is stored on one or more physical storage devices that may span one or more servers in one or more locations. The cloud storage may be controlled by a single entity, such as a hosting entity or a cloud storage provider, which maintains the physical storage devices and protects the corresponding physical infrastructure from attacks. The entity may have unrestricted access to the data stored in the cloud storage. The cloud storage may be accessed via a network or other communication medium that may interconnect the distributed environment. The cloud storage may be accessed through a service or an application, such as a cloud computing service, or a web service application, or similar interfacing technology, which may provide a client device with access to the physical environment hosting the cloud storage via the distributed environment.

According to an embodiment, the encrypted data is stored in a further cloud storage of the distributed environment that is separate from the cloud storage storing the encrypted private key. The cloud storage storing the encrypted private key may be denoted as a key cloud storage and the further cloud storage storing the encrypted data may be denoted as a data cloud storage. Since the key cloud storage and the data cloud storage are separate cloud storage entities, they are controlled by different providers. Thus, the encrypted data and the encrypted key are stored in different physical databases. An attacker who may gain unauthorized access to the data of the key cloud storage may not have access to the data of the data cloud storage and vice versa. This further increases security of the stored sensitive data.

In one embodiment, the method further comprises generating the key encryption key using an encryption passphrase received from a user of the client device. The key encryption key may be generated using a key deriving or password hashing function, wherein the encryption passphrase is used as a parameter of the key deriving or password hashing function. The user preferably ensures confidentiality of the encryption passphrase since it represents a starting point for obtaining access to the sensitive data. The encryption passphrase may be entered each time access to the sensitive data is desired. After receiving the encryption passphrase, the key encryption key may be generated using the encryption passphrase, and the key encryption key is used to decrypt the encrypted private key, which is used to decrypt the encrypted data. Any user, who has the encryption passphrase may gain access to the encrypted data from any client device. Moreover, since the key encryption key is generated using the encryption passphrase, the key encryption key needs not to be stored on any client device, but may be re-generated on a client device on demand based on the entered encryption passphrase.

In one embodiment, the method further comprises changing the encryption passphrase, including receiving a new encryption passphrase, generating a new key encryption key, encrypting the retrieved private key using the new key encryption key, thereby generating a new encrypted private key, and storing the new encrypted private key together with a hash of the new key encryption key remotely in the distributed environment. If the encryption passphrase has to be changed, such as during routine rotations, when an employee leaves, or in any other situation that may compromise the security or reliability of the underlying system, the private key may be retrieved and decrypted using the key encryption key. The private key is then re-encrypted using the new key encryption key and stored in the distributed environment. Hence, only the private key has to be re-encrypted with the new key encryption key and the data needs not to be re-encrypted, which significantly reduces processing resources and processing time that would be otherwise required for re-encrypting the stored data. According to one embodiment, the method further comprises receiving, from a user of the client device, an input specifying a recovery key, generating a hash of the recovery key, and evaluating the hash of the recovery key with a hash of the private key, the hash of the private key being remotely stored in the distributed environment, wherein if the hash of the recovery key matches the hash of the private key, the user is enabled to change the encryption passphrase. Since the encryption passphrase represents the starting point for obtaining access to the stored data, the embodiment may enable a recovery scheme if the encryption passphrase is lost. To enable recovery, the private key itself may be retrieved from a remote storage in a secure manner and stored in a local storage or printed or otherwise saved as a recovery key. Further to the hash of the key encryption key, a hash of the private key may be stored in the respective cloud storage of the distributed environment. If the encryption passphrase is lost, the recovery key may be entered on a client device and hashed. The hash of the recovery key may be compared to the stored hash of the private key to verify the recovery key. If both hashes match, the recovery key corresponds to the private key and the user may be enabled to enter a new encryption passphrase that is used to generate a new key encryption key, which is used to encrypt the recovery key (corresponding to the private key) for remote storage in the distributed environment.

In yet another embodiment, the method further comprises receiving, from a user of the client device, an input specifying a passphrase, generating a further key encryption key based on the passphrase, generating a hash of the further key encryption key, and evaluating the generated hash with a hash of the key encryption key, the hash of the key encryption key being remotely stored in the distributed environment. This access mechanism guarantees that only users that have entered a correct encryption passphrase may get access to the encrypted data. Preferably, the hash of the further key encryption key is compared with the hash of the key encryption key.

According to a particular embodiment, the encrypted private key is retrievable only if the hash of the further key encryption key and the hash of the key encryption key match. This defines a further security layer, which prevents unauthorized access to the encrypted private key. Only if a correct encryption passphrase has been provided, the underlying system may unlock or provide access to the encrypted private key. This may prevent attacks directed at a brute force decryption of private keys.

In yet another embodiment, the method further comprises authenticating the user of the client device. Preferably, input of the passphrase is enabled for authenticated users only. Users may be authenticated by providing credentials, such as a username, an email and/or a valid password, and the like, in any combination. Moreover, two factor authentication can be used to improve security. The underlying system may require a valid authentication of a user before the user is enabled to enter the encryption passphrase. Any login attempt may be tracked and/or logged. User accounts may be locked after too many failed login attempts. Since entering of the encryption passphrase may be enabled for authenticated users only, direct brute force attacks on the encryption passphrase may be prevented.

In one embodiment, the encrypted data is symmetrically encrypted using a symmetric key, wherein the symmetric key is based on the private key. The symmetric key may be derived from the private key in a predefined manner to enable encryption and decryption of the data using the private key. This may enable keeping the private key secret and distributing only the symmetric key for encryption of the data. The symmetric key may also directly correspond to the private key. This may be advantageous, in particular, in scenarios, where the data is encrypted on client side (zero knowledge encryption) and then stored in the cloud storage of the distributed environment.

According to another embodiment, the encrypted data is asymmetrically encrypted using a public key associated with the private key. During generation of keying material, a key pair consisting of a private key and a public key may be generated first. The private key may be encrypted using the key encryption key and stored in an encrypted form remotely in the distributed environment. The public key may be published according to the chosen PKI approach. Any data intended for the owner of the key pair (the recipient) may be encrypted using the public key and subsequently stored in encrypted form remotely in the distributed environment. By entering the encryption passphrase, the recipient may generate the key encryption key and decrypt the encrypted private key stored remotely in the distributed environment. The decrypted private key may then be used to decrypt the asymmetrically encrypted data stored remotely in the distributed environment.

In yet another embodiment, the data is medical patient data. The data may represent one or more medical records, health records, or medical charts, or any other part of a systematic documentation of a patient's medical history and care. The data may include one or more portions entered over time, for example, by health care professionals, wherein the data (or portions thereof) may record one or more of observations and administration of drugs and therapies, orders for the administration of drugs and therapies, test results, medical imaging data, reports, and the like, in any combination. The data may further include messages, such as emails, reports, or similar. The data may be structured, such as in a hierarchical order, and may include references between one or more portions of the data for each patient and/or cross-references for a plurality of patients. Medical patient data is highly sensitive data, which has to be secured for storage. The present disclosure enables a highly flexible distribution of medical patient data via distributed environments with a very high level of security and reliability. Authorized entities may flexibly access the medical patient data from different client devices without being limited to a particular computing environment. This may enable a highly secured exchange and maintenance of medical patient data between healthcare professionals and/or between patients and healthcare professionals.

According to a second aspect of the present disclosure, a client device is defined, wherein the client device comprises a local memory, and one or more processors. The client device is configured to execute a secured application performing a method according to one or more embodiments or aspects of the present disclosure. In particular, the client device may be configured to securely retrieve data from a distributed environment by retrieving a key encryption key from a local storage, retrieving an encrypted private key associated with the key encryption key from the distributed environment, the encrypted private key being remotely stored in the distributed environment, decrypting the encrypted private key using the key encryption key, thereby generating a private key, retrieving encrypted data from the distributed environment, the encrypted data being remotely stored in the distributed environment, and decrypting the encrypted data using the private key.

The client device may be a computing device of any form, such as a personal computer, a handheld device or a mobile device, which may include at least one hardware interface to connect to the distributed environment via a network. The client device may further include input and output means, such as a keyboard, a mouse, a touch-sensitive screen or surface, and/or a pen, or any other suitable input device in any combination, as well as a display device and/or a projector, or any other suitable output devices in any combination, enabling the user of the client device to enter information and to output information for the user.

In one embodiment, the local memory is configured to provide a secured storage area for storage of the key encryption key and/or of the encrypted private key. For example, the secured storage area may be configured such that other applications executing on the client device are not allowed to access the secured storage area. This may be controlled by the operating system or any other security measure implemented on the client device. This may prevent malicious applications from obtaining the key encryption key and other sensitive keying material stored in the secured storage area. Preferably, the secured storage area may further store the (decrypted) private key.

In yet another embodiment, the secured storage area is automatically purged or wiped after exiting the secured application. This may be accomplished by the operating system or a corresponding security measure implemented on the client device, which may be triggered by a change of a user or an exit or other termination of the secured application. The automatic purge of the secured storage area may include a rewriting of the storage area with random information, initialization data, or a data pattern, in any combination.

It is to be understood that embodiments of the client device or a corresponding computing device may include one or more features as defined in one or more embodiments or aspects of the present disclosure in any combination. In particular, the client device or the corresponding computing device may include structural features, such as processing means or processing components, that may be implemented in software or realized as dedicated hardware, or a combination thereof, and that may reflect or implement processing steps of one or more methods according to embodiments of the present disclosure, in any combination. Moreover, methods according to embodiments or aspects of the present disclosure may include processing steps that reflect structural features of the client device or a corresponding computing device according to one or more embodiments of the present disclosure, in any combination.

According to a third aspect of the present disclosure, a method for securely providing data in a distributed environment is defined. The method comprises providing access to an encrypted private key associated with a key encryption key, the encrypted private key being remotely stored in the distributed environment, wherein the encrypted private key is decryptable using a key encryption key stored locally on a client device of the distributed environment, and providing access to encrypted data, the encrypted data being remotely stored in the distributed environment, wherein the encrypted data is decryptable using the private key.

Preferably, the method may be entirely or at least partially implemented on at least one server device in the distributed environment that may mediate access to the secured data in the distributed environment by one or more client devices.

According to one embodiment, the method further comprises receiving, from the client device, a request for the encrypted private key, the request including a hash, and comparing the hash with a hash associated with the private key or with a hash associated with the key encryption key. Preferably, the encrypted private key is provided to the client device only if the received hash matches the hash associated with the private key or the hash associated with the key encryption key. This may implement a security layer, which grants access to encrypted private keys only to those client devices that were able to provide a correct matching hash.

In one embodiment, the encrypted data is symmetrically encrypted using the private key or asymmetrically encrypted using a public key associated with the private key.

In yet another aspect of the present disclosure, a distributed environment is defined, wherein the distributed environment comprises at least one cloud storage, at least one server, and one or more client devices. The at least one server may be configured to securely provide data in the distributed environment according one or more aspects or embodiment of the present disclosure. Additionally or as an alternative, the one or more client devices may be each configured to securely retrieve data from the distributed environment according to one or more aspects or embodiments of the present disclosure.

The distributed environment may be interconnected via one or more networks, which connects the at least one cloud storage, the at least one server and the one or more client devices with each other. The at least one cloud storage and the at least one server may represent one or more hardware devices within the distributed environment that may form local structures and that may be controlled by respective entities. The server may be a computing device or a plurality of interconnected computing devices that may include at least one hardware interface to connect the server to the distributed environment via the network. The client device may be a computing device of any form, such as a personal computer, a handheld device or a mobile device, which may include at least one hardware interface to connect to the distributed environment via the network.

According to one embodiment, the at least one cloud storage includes a key cloud storage and a separate data cloud storage, wherein the encrypted private key is stored in the key cloud storage and the encrypted data is stored in the data cloud storage. Each cloud storage may be controlled by a separate cloud provider. Hence, even if a respective cloud provider would gain unauthorized access to data stored on its cloud storage, the cloud provider would be prohibited from directly accessing data stored on the other cloud storage.

Moreover, according to the present disclosure, one or more machine-readable media are defined. The media comprise instructions stored thereon that, when executed on a computing device, configure the computing device to perform a method according to one or more aspects or embodiment of the present disclosure. Preferably, this may include a method for securely retrieving data on a client device in a distributed environment or a method for securely providing data in the distributed environment according to one or more aspects or embodiments of the present disclosure, even in combination.

It is to be understood that the client device or the distributed environment according to further embodiments of the present disclosure may include structural or functional components that may be configured to perform steps of a method according to one or more aspects or embodiments of the present disclosure, in any combination. Likewise, methods according to further embodiments of the present disclosure may define processing steps corresponding to structural or functional components of the client device or the distributed environment according to one or more aspects or embodiments of the present disclosure, in any combination and according to any suitable processing order.

### BRIEF DESCRIPTION OF THE DRAWINGS

The specific features, aspects and advantages of the present disclosure will be better understood with regard to the following description and accompanying drawings where:
- Fig. 1: depicts a schematic representation of a distributed environment with a client device according to one embodiment of the present disclosure;
- Fig. 2: illustrates a schematic representation of data retrieval according to an embodiment of the present disclosure;
- Fig. 3: shows a flow chart of a method for securely retrieving data on a client device in a distributed environment according to one embodiment of the present disclosure; and
- Fig. 4: shows a flow chart of a method for securely providing data in a distributed environment according to one embodiment of the present disclosure.

### DETAILED DESCRIPTION

In the following description, reference is made to drawings, which show by way of illustration various embodiments. Also, various embodiments will be described below by referring to several examples. It is to be understood that the embodiments may include changes in design and structure without departing from the scope of the claimed subject matter.

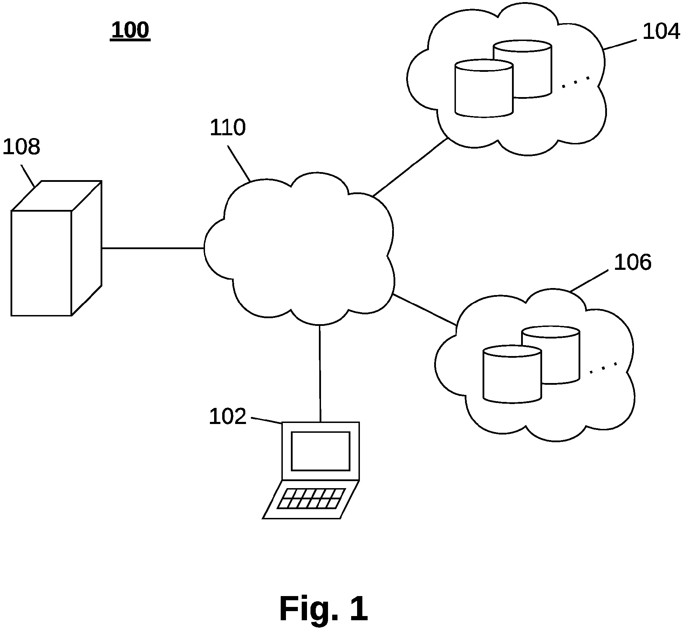

Figure 1 depicts a schematic representation of a distributed environment 100 with a client device 102 according to one embodiment of the present disclosure. The distributed environment 100 includes a first cloud storage 104 and a second cloud storage 106, which is separate from the first cloud storage 104. Preferably, the first cloud storage 104 and the second cloud storage 106 are provided by completely separate cloud providers that do not have mutual access to their storage devices in the respective first 104 and second 106 cloud. The distributed environment 100 may further include at least one server 108, which can be implemented on one or more computing devices. The at least one server 108 may be controlled by a service (or platform) provider. The service (or platform) provider may control secure retrieval and/or secure provision of data in the distributed environment. All entities within the distributed environment 100 may be interconnected by a network 110, such as an IP-based network or a network using another communication technology. It is to be understood that the distributed environment 100 could also be located within the network 110 or represent the network 110.

Sensitive data may be encrypted and stored on one of the first and second cloud storages 104, 106, such as on the first cloud storage 104. The keying material, which may include a private key, may be stored in an encrypted form on the same or on the other cloud storage, such as on the second cloud storage 106. In order to obtain access to the sensitive data, the client device 102 may send a request for encrypted keying material, including the encrypted private key. This request may be submitted, to the service (or platform) provider via the at least one server 108. The at least one server 108 may forward the request to the second cloud storage 106, in order to retrieve the encrypted keying material. Additionally or as an alternative, after approval by the service (or platform) provider, the client device 102 may directly forward the request for the encrypted keying material to the second cloud storage 106.

The client device 102 may be authenticated with the server 108. For example, a user of the client device 102 may provide credentials to the server 108, which may authenticate the user. The server 108 may process any subsequent requests from the client device 102 for authenticated users only.

The client device 102 may retrieve a key encryption key that is associated with the retrieved encrypted keying material from its local storage and may decrypt the retrieved encrypted keying material, including the private key, using the key encryption key, in order to obtain the decrypted keying material, including the private key. The keying material and/or the private key may be stored in a secured local storage of the client device 102.

Subsequently, the client device 102 may submit a request for the sensitive data via the server 108 or directly to the first cloud storage 104. Again, the service (or platform) provider operating the server 108 may grant access to the sensitive data only for authenticated users. In response to the request, the sensitive data in an encrypted form may be submitted from the first cloud storage via the network 110 to the client device 102. The client device 102 may use the keying material, including the private key, to decrypt the encrypted data.

Storing data in the cloud delivers many advantages for users of sensitive data, such as in healthcare. In particular, this may be advantageous if multiple parties have to share and process the sensitive data, including clinics, practices, patients, or health insurance companies. Cloud-based storage is cost-efficient since no own infrastructure has to be maintained, and no IT technicians have to be employed. Moreover, cloud-based storage is reliable because the cloud provider arranges backups and redundancy, secure because the cloud provider offers a professional IT infrastructure, sustainable because resources are shared between users, and fast because computation power can be dynamically changed and multiple datacenter locations may be offered.

Yet, for sensitive data, such as in healthcare, security and performance requirements are high. Even though these requirements may be met by cloud providers, users of sensitive data do not want to trust a cloud provider, since a cloud provider may easily get access to the stored data.

This problem can be avoided by providing a client-sided encryption of sensitive data. If the sensitive data is encrypted by strong encryption techniques and encryption keys are not accessible by the cloud provider, the cloud provider cannot obtain the sensitive data.

Key management may require several usability considerations. The keys must be protected from unauthorized access and from accidental loss. Keys should be available at different locations and preferably shareable between multiple authorized parties. Moreover, keys should be preferably accessible to applications.

Key management can be addressed by storing the key on a mobile device, e.g. a smartcard, a USB drive or within a mobile phone. This may provide weak protection against theft and a low usability, also requiring special interfaces and/or drivers at computing devices used for accessing the sensitive data. As a loss of the key poses a serious problem, backup keys should be well protected. According to another approach biometric data may be used to derive the key. Depending on the implementation, this may carry high security but requires special devices for generating the key, which may be rarely available and/or expensive. In yet another approach the key may be derived from a passphrase which may provide a good usability. However, in order to obtain a reasonable safety level, more complex passphrases have to be used, which may be difficult to memorize. Also, changing of a passphrase may require re-encryption of any previously encrypted data.

Since according to the embodiment of figure 1, the keying material is stored in an encrypted form on a separate cloud storage than the sensitive data, the different cloud providers cannot simultaneous get access to both, the keying material and the sensitive data. Moreover, since the passphrase provided at client device 102 is not used to decrypt the sensitive data, but to get access to the encrypted keying material, the keying material may be selected to be complex enough to maintain a high security level with regard to requirements of the sensitive data.

It is to be understood that even though embodiments of the present disclosure are advantageous over the previously mentioned approaches for key management and data distribution, aspects of these approaches may be combined with embodiments of the present disclosure in any combination. For example, the encryption passphrase may be based on biometric data and/or using a mobile device, and the like, as discussed above.

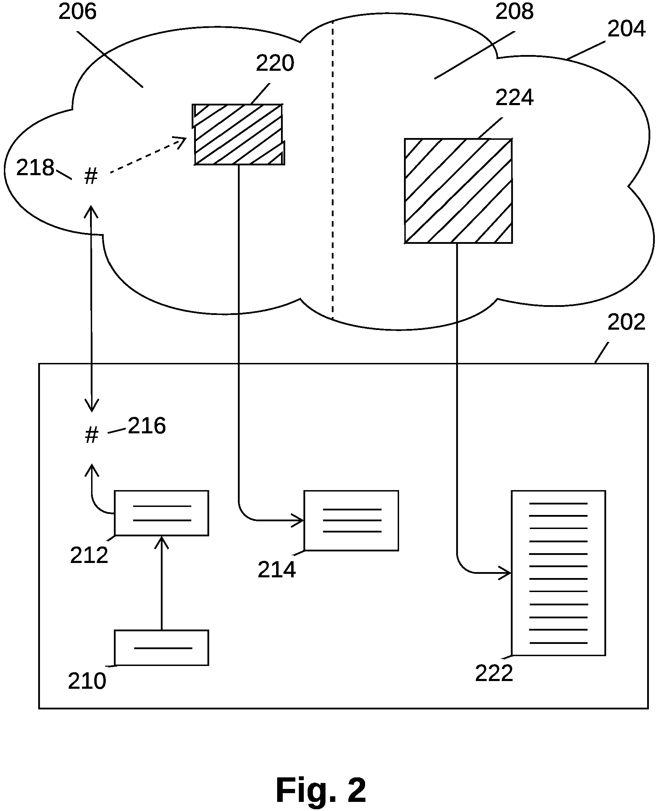

Figure 2 illustrates a schematic representation of a secured distribution and retrieval of sensitive data according to one embodiment of the present disclosure.

Figure 2 shows a schematic view of a client device 202, which may communicate with a network 204. The client device 202 may be the client device 102 as shown in figure 1. The network 204 may include a first part 206 and a second part 208. Both parts 206, 208 may be preferably controlled by different entities. For example, the first part 206 may correspond to the first cloud storage 104 and the second part 208 may correspond to the second cloud storage 106, or vice versa, as shown in figure 1. Both parts 206, 208 and the respective cloud storage may be provided by different cloud providers. Figure 2 shows an example embodiment of processing related to retrieval of keying material in order to obtain sensitive data. Access to sensitive data may be mediated via a service or platform provider, who may operate one or more server devices (not shown) within the network 204, such as the at least one server 102 of figure 1. The client device 202 may register with the platform provider and the platform provider may control access to the different parts 206, 208 of the network 204.

Retrieval and distribution of sensitive data may start with a provision of an encryption passphrase 210 on the client device 202. For example, a user of the client device 202 may type in or otherwise input a passphrase, or may use a mobile storage to provide the passphrase to the client device 202. The encryption passphrase 210 may be used to generate a key encryption key 212.

The key encryption key 212 may be used to encrypt a private key 214, which may form part of keying material. The private key 214 may be randomly selected or generated based on various factors. Additionally, the entire keying material may be encrypted using the key encryption key 212. The private key 214 may be stored in an encrypted form in the network 204, such as on a remote storage in the first part 206. Hence, it is not required to store the private key 214 on the client device 202 locally.

Hence, during subsequent retrieval, the private key 214 may not be available on the client device 202. In order to retrieve the private key 214, the client device 202 may generate a hash 216 of the key encryption key 212, for example, by applying a hash function to the key encryption key 212, and may submit the hash 216 to the network 204. The request may be directed towards the first part 206 of the network 204. A server in the network 204 may validate the submitted hash 216 with a hash 218. The hash 208 may be a previously generated hash of the key encryption key 212 that may be stored in the network 204, such as locally on the server, in relation to the requested stored encrypted private key 220. Upon successful validation of both hashes 216, 218, for example, if both hashes 216, 218 match, the encrypted private key 220 may be returned to the client device 202 that may in turn decrypt the encrypted private key 220 using the key encryption key 212, in order to obtain the private key 214.

Sensitive data 222 may be encrypted such that they can be decrypted using the private key 214 only. The sensitive data 222 in an encrypted form may be stored in the network 204, for example, on a separate remote storage in the second part 208 of the network 204 as encrypted sensitive data 224. Since the client device 202 is in possession of the private key 214, the encrypted sensitive data 224 may be retrieved from the network 204 and decrypted using the private key 214.

The sensitive data may be encrypted on client side, which may be understood as a "zero knowledge encryption", and then stored remotely in the cloud. The sensitive data cannot be decrypted by any unauthorized party since the keying material, including the private key, is only known to the user.

The sensitive data may be encrypted by a user, stored remotely, and again retrieved by the user. However, the sensitive data may also be encrypted by another party, which may desire to provide the sensitive data to the user. In this case, preferably asymmetric encryption may be used to exchange data between multiple users, such as between a doctor and a patient, or between a plurality of doctors. Additionally or as an alternative, a hybrid encryption scheme may be used, wherein asymmetric encryption may be used for exchange of a random symmetric key. In one preferred use case, the Libsodium library may be used for authenticated public key encryption. This may use, in one example, one or more of key exchange: X25519; encryption: XSalsa20 stream cipher; and authentication: Poly1305 MAC.

As described above, the sensitive data may be stored by the user for own purposes only. In this case, symmetric encryption may be used for storage of sensitive data of the user, such as doctor's data, or patient's data. In one preferred use case, the Libsodium library may be used for authenticated secret key encryption. This may use, in one example, one or more of encryption: XSalsa20 stream cipher; and authentication: Poly1305 MAC.

In asymmetric encryption schemes, the private key (PK) allows the user to decrypt data sent to the user after the data has been encrypted with a corresponding public key of the user. The same or a modified PK may also be used as a secret for symmetric encryption. For example, in another preferred use case, X25519 and XSalsa20 both use 256 bit keys.

During registration, the user may enter an arbitrary encryption passphrase (EP) 210. The user should ensure confidentiality of the EP 210. The EP 210 should only be shared between trusted parties, such as authorized co-workers requiring access to the sensitive data. This may include staff of a clinic department. In one example, a key deriving/password hashing function, such as the Libsodium's Argon2 key deriving/password hashing function, may be used to generate the key encryption key (KEK) 212.

The PK 214 may be generated randomly during user registration. Preferably, the PK 214 is not derived from the EP 210 to grant maximum entropy irrespective of the strength of the EP 210. Instead, the KEK 212 is used to encrypt the PK 214. The encrypted private key (EPK) 220 may then be stored in a cloud storage in the network 204.

Whenever a user logs into the client device 202, the EPK 220 may be retrieved from the network 204, decrypted on client side using the entered EP 210, and used to decrypt any encrypted sensitive data 224 on the client device 202.

In a preferred embodiment, access to the EPK 220 and to the encrypted sensitive data 224 may be granted after a valid user authentication with the platform provider. Authentication may be performed by a server within the network, such as the server 108. The hash 216 of the KEK 212, such as a SHA-256 hash, may be used to further improve the security of the system by comparing the hash 218 with the hash 216 derived from the EP 210 entered by the user, to validate correctness of the EP 210 on server side without disclosing the EPK 220 to the user.

By storing the EPK 220 in a cloud in the network 204, access from different locations is ensured. The platform therefore supports access from various locations, such as home office and mobile office out-of-the-box.

If the EP 210 must be changed, such as due to security requirements or when an entity becomes an unauthorized entity, for example, during routine rotations or when an employee leaves, a new EP is chosen and a new KEK is generated based on the EP. Only the PK 214 has to be re-encrypted with the new KEK. The sensitive data needs not to be re-encrypted since the PK 214 remains the same.

According to one embodiment, the EP 210 is memorized by the user. The KEK 212 may be stored in a local secured memory of the client device 202. The secured storage may be accessed by selected applications having respective access rights. In particular, the KEK 212 is preferably never disclosed to the server on the network 204 or any other entity outside of the client device 202. The secured storage may be purged or wiped after application exit.

The encrypted sensitive data 224 and encrypted keys are preferably stored on different storage devices or databases in different storage clouds. Hence, they can be stored and managed by different cloud providers, such as a first and a second cloud provider, and even in different countries.

The first cloud provider storing the encrypted sensitive data may have no access to the key database. To read the sensitive data, the first cloud provider must use brute force attacks or algorithm vulnerabilities. As the private/symmetric key is generated randomly, brute force attacks will generally fail. For example, up to 2¹²⁸ combinations (a 256 bit curve X25519 key provides for 128 bits of security) have to be tried out, which is computationally impossible in a reasonable time span. If the private/symmetric key would have been directly derived from the user's encryption passphrase, the number of combinations would be directly related to the strength of the used encryption passphrase. Therefore, the first cloud provider will not be able to get access to the encryption sensitive data.

The second cloud provider storing the encrypted private key could get the private/symmetric key via brute force attacks, depending on the user's encryption passphrase strength and depending on the key hashing algorithm, computational power, and the available time. However, the second cloud provider has no access to the encrypted data stored at the first cloud provider, making the key alone useless.

By using different cloud providers in different locations, such as different countries, the risk of a single entity obtaining full access to sensitive data by brute force attacks can be avoided or greatly reduced.

Preferably, in order to further increase the security level, the platform provider, which may operate server 108 of figure 1, may continuously monitor the encryption algorithms used by applications on client devices and may switch to other encryption algorithms once the used encryption algorithms cannot be considered safe anymore. This may be seamlessly integrated in the processing of the client device 202 without providing the platform provider with access to the sensitive data or the private key.

According to yet another preferred embodiment, the platform provider may require an authentication of users of the client device 202. In one example, an Oauth2 compatible authentication provider, such as Autho, can be used. Users may authenticate by entering credentials, such as a username, an email, and/or a password, and the like in any combination. Two-factor authentication could be further used to improve security. Only in response to a valid authentication, the user may be enabled to enter the encryption passphrase 210. This additional security layer may further protect from direct brute force attacks on the encryption passphrase 210. Accordingly, the encryption passphrase 210 may serve as second authentication, which requires a successful authentication in the first step.

The authentication provider or the platform provider may lock user accounts after too many failed login attempts and implement other security measures to make it more difficult to break the authentication security layer.

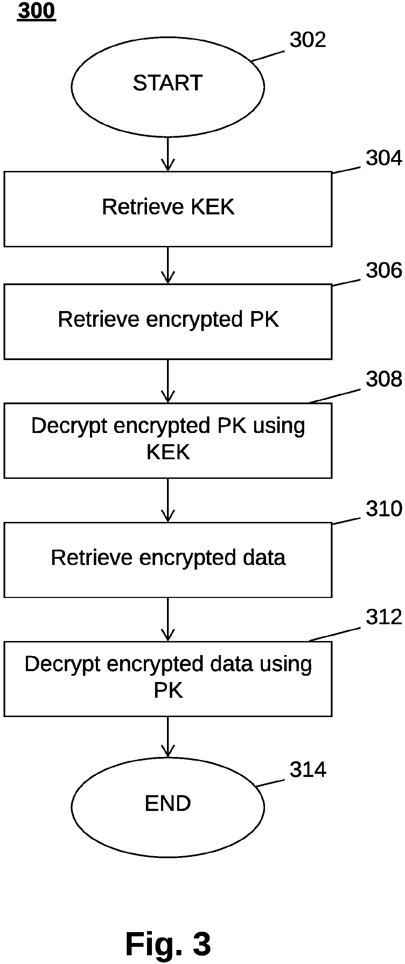

Figure 3 shows a flow chart of a method 300 for securely retrieving data on a client device in a distributed environment. The client device may be the client device 102 of figure 1 or the client device 202 of figure 2 and the distributed environment may be the distributed environment 100 of figure 1 or the corresponding network 204 of figure 2.

The method 300 may start in item 302 and may continue in item 304 with retrieving a key encryption key from a local storage. The key encryption key may have been previously generated using an encryption passphrase that has been entered by a user of the client device.

In item 306, an encrypted private key that is remotely stored in the distributed environment and which is associated with the key encryption key may be retrieved from the distributed environment. The encrypted private key may be stored in a cloud storage of the distributed environment. In item 308, the encrypted private key is decrypted using the key encryption key in order to generate a private key.

In item 310, encrypted data are retrieved from the distributed environment. The encrypted data may be remotely stored in the distributed environment. Preferably, the encrypted data is stored in a different cloud storage of the distributed environment that may be completely separate from the cloud storage storing the encrypted private key.

In item 312, the encrypted data may be decrypted using the private key. Thereafter, the method may conclude in item 314.

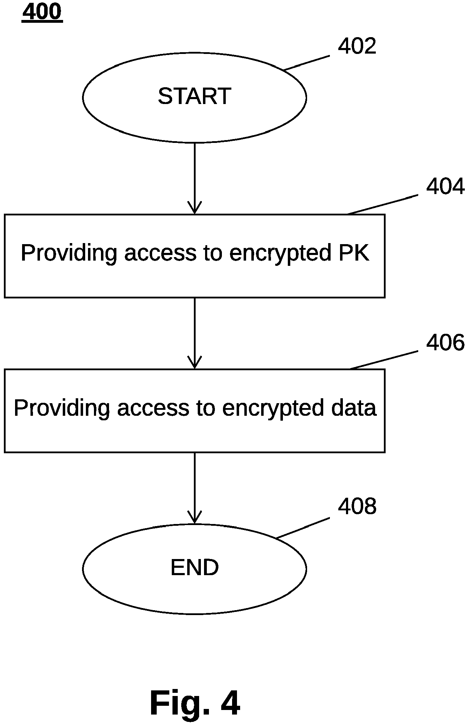

Figure 4 shows a flow chart of a method 400 for securely providing data in a distributed environment. The distributed environment may be the distributed environment 100 of figure 1. The method may be executed on a server of the distributed environment, such as a management server located in the distributed environment, for example, the server 108 of figure 1.

The method may start in item 402 and may proceed with item 404, where access to an encrypted private key associated with a key encryption key is provided. The encrypted private key may be remotely stored in the distributed environment, such as in a first cloud. The encrypted private key may be generated using a key encryption key. Hence, the encrypted private key may be decryptable using the key encryption key. The key encryption key may be stored locally on a client device of the distributed environment.

In item 406, access to encrypted data that are remotely stored in the distributed environment may be provided. For example, the client device that requested access to the encrypted private key may request the remotely stored encrypted data, wherein the encrypted data may be decrypted using the private key. The method may conclude in item 408.

While some embodiments have been described in detail it is to be understood that aspects of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

## Claims

1. A method for securely retrieving data on a client device in a distributed environment, the method comprising:
retrieving a key encryption key from a local storage;
retrieving an encrypted private key associated with the key encryption key from the distributed environment, the encrypted private key being remotely stored in the distributed environment;
decrypting the encrypted private key using the key encryption key, thereby generating a private key;
retrieving encrypted data from the distributed environment, the encrypted data being remotely stored in the distributed environment; and
decrypting the encrypted data using the private key.

2. The method of claim 1, wherein the encrypted private key is stored in a cloud storage of the distributed environment, and wherein the encrypted data is stored in a further cloud storage of the distributed environment that is separate from the cloud storage storing the encrypted private key.

3. The method of one of the preceding claims, further comprising generating the key encryption key using an encryption passphrase received from a user of the client device.

4. The method of one of the preceding claims, further comprising changing the encryption passphrase, including receiving a new encryption passphrase, generating a new key encryption key, encrypting the retrieved private key using the new key encryption key, thereby generating a new encrypted private key, and storing the new encrypted private key together with a hash of the new key encryption key remotely in the distributed environment.

5. The method of one of the preceding claims, further comprising receiving, from a user of the client device, an input specifying a recovery key, generating a hash of the recovery key, and evaluating the hash of the recovery key with a hash of the private key, the hash of the private key being remotely stored in the distributed environment, wherein if the hash of the recovery key matches the hash of the private key, the user is enabled to change the encryption passphrase.

6. The method of one of the preceding claims, further comprising receiving, from a user of the client device, an input specifying a passphrase, generating a further key encryption key based on the passphrase, generating a hash of the further key encryption key, and evaluating the generated hash with a hash of the key encryption key, the hash of the key encryption key being remotely stored in the distributed environment, wherein the hash of the further key encryption key is compared with the hash of the key encryption key.

7. The method of one of the preceding claims, further comprising authenticating a user of the client device.

8. The method of one of the preceding claims, wherein the encrypted data is symmetrically encrypted using a symmetric key, wherein the symmetric key is based on the private key.

9. The method of one of the preceding claims, wherein the encrypted data is asymmetrically encrypted using a public key associated with the private key.

10. The method of one of the preceding claims, wherein the data is medical patient data.

11. A client device, comprising:
a local memory; and
one or more processors, wherein the client device is configured to execute a secured application performing a method according to any one of the preceding claims.

12. The client device of claim 11, wherein the local memory is configured to provide a secured storage area for storing of the key encryption key and/or of the private key, wherein the secured storage area is automatically purged after exiting the secured application.

13. A method for securely providing data in a distributed environment, the method comprising:
providing access to an encrypted private key associated with a key encryption key, the encrypted private key being remotely stored in the distributed environment, wherein the encrypted private key is decryptable using a key encryption key stored locally on a client device of the distributed environment; and
providing access to encrypted data, the encrypted data being remotely stored in the distributed environment, wherein the encrypted data is decryptable using the private key.

14. A distributed environment comprising:
at least one cloud storage;
at least one server; and
one or more client devices,
wherein the at least one server is configured to securely provide data in the distributed environment according a method of claim 13.

15. The distributed environment of claim 14, wherein the at least one cloud storage includes a key cloud storage and a separate data cloud storage, wherein the encrypted private key is stored in the key cloud storage and the encrypted data is stored in the data cloud storage.

## Amended claims

### Amended claims in accordance with Rule 137(2) EPC.

1. A method for securely retrieving data on a client device in a distributed environment, the method comprising:
retrieving (304) a key encryption key from a local storage, wherein the key encryption key is generated using an encryption passphrase received from a user of the client device;
retrieving (306) an encrypted private key associated with the key encryption key from the distributed environment, the encrypted private key being remotely stored in the distributed environment;
decrypting (308) the encrypted private key using the key encryption key, thereby generating a private key;
retrieving (310) encrypted data from the distributed environment, the encrypted data being remotely stored in the distributed environment; and
decrypting (312) the encrypted data using the private key.

2. The method of claim 1, wherein the encrypted private key is stored in a cloud storage of the distributed environment, and wherein the encrypted data is stored in a further cloud storage of the distributed environment that is separate from the cloud storage storing the encrypted private key.

3. The method of one of the preceding claims, further comprising changing the encryption passphrase, including receiving a new encryption passphrase, generating a new key encryption key, encrypting the retrieved private key using the new key encryption key, thereby generating a new encrypted private key, and storing the new encrypted private key together with a hash of the new key encryption key remotely in the distributed environment.

4. The method of one of the preceding claims, further comprising receiving, from a user of the client device, an input specifying a recovery key, generating a hash of the recovery key, and evaluating the hash of the recovery key with a hash of the private key, the hash of the private key being remotely stored in the distributed environment, wherein if the hash of the recovery key matches the hash of the private key, the user is enabled to change the encryption passphrase.

5. The method of one of the preceding claims, further comprising receiving, from a user of the client device, an input specifying a passphrase, generating a further key encryption key based on the passphrase, generating a hash of the further key encryption key, and evaluating the generated hash with a hash of the key encryption key, the hash of the key encryption key being remotely stored in the distributed environment, wherein the hash of the further key encryption key is compared with the hash of the key encryption key.

6. The method of one of the preceding claims, further comprising authenticating a user of the client device.

7. The method of one of the preceding claims, wherein the encrypted data is symmetrically encrypted using a symmetric key, wherein the symmetric key is based on the private key.

8. The method of one of the preceding claims, wherein the encrypted data is asymmetrically encrypted using a public key associated with the private key.

9. The method of one of the preceding claims, wherein the data is medical patient data.

10. A client device, comprising:
a local memory; and
one or more processors, wherein the client device is configured to execute a secured application performing a method according to any one of the preceding claims.

11. The client device of claim 10, wherein the local memory is configured to provide a secured storage area for storing of the key encryption key and/or of the private key, wherein the secured storage area is automatically purged after exiting the secured application.

12. A method for securely providing data in a distributed environment, the method comprising:
providing (404) access to an encrypted private key associated with a key encryption key, the encrypted private key being remotely stored in the distributed environment, wherein the encrypted private key is decryptable using the key encryption key stored locally on a client device of the distributed environment and wherein the key encryption key is generated using an encryption passphrase received from a user of the client device; and
providing (406) access to encrypted data, the encrypted data being remotely stored in the distributed environment, wherein the encrypted data is decryptable using the private key.

13. A distributed environment comprising:
at least one cloud storage (104, 106);
at least one server (108); and
one or more client devices (102),
wherein the at least one server (108) is configured to securely provide data in the distributed environment according a method of claim 12.

14. The distributed environment of claim 13, wherein the at least one cloud storage (104, 106) includes a key cloud storage and a separate data cloud storage, wherein the encrypted private key is stored in the key cloud storage and the encrypted data is stored in the data cloud storage.
